## Europäisches Patentamt

(19) **European Patent Office**

**Office européen des brevets**

(11) Veröffentlichungsnummer: **0 159 649**
**B1**

(12) # EUROPÄISCHE PATENTSCHRIFT

(45) Veröffentlichungstag der Patentschrift:
**17.11.88**

(51) Int. Cl.⁴: **B 23 K 9/02**

(21) Anmeldenummer: **85104548.4**

(22) Anmeldetag: **15.04.85**

(54) Schweisszange zum Verbinden von zwei aneinanderstossenden Rohrenden durch Lichtbogenschweissung.

(30) Priorität: **27.04.84 DE 3415755**

(43) Veröffentlichungstag der Anmeldung:
**30.10.85 Patentblatt 85/44**

(45) Bekanntmachung des Hinweises auf die Patenterteilung:
**17.11.88 Patentblatt 88/46**

(84) Benannte Vertragsstaaten:
**AT BE CH DE FR GB IT LI NL SE**

(56) Entgegenhaltungen:
**DE - A - 2 036 528**
**DE - A - 2 312 797**
**GB - A - 1 428 120**
**US - A - 3 688 071**
**US - A - 4 161 640**
**US - A - 4 372 474**

(73) Patentinhaber: **Siemens Aktiengesellschaft Berlin und München, Wittelsbacherplatz 2, D-8000 München 2 (DE)**

(72) Erfinder: **Gügel, Siegfried, Dipl.-Ing. (FH), Oppelnerstrasse 15, D-8520 Erlangen (DE)**
Erfinder: **Pellkofer, Dieter, Dipl.-Ing. (FH), Sonnenstrasse 52, D-8522 Herzogenaurach (DE)**
Erfinder: **Förner, Siegfried, Leipziger Strasse 69, D-8520 Erlangen (DE)**

## Beschreibung

Die Erfindung betrifft eine Schweisszange zum Verbinden von zwei aneinanderstossenden Rohrenden durch Lichtbogenschweissung mit einer Klemmeinrichtung zur Festlegung an mindestens einem Rohrende und mit einer Elektrode, die auf einer durch die Zange vorgegebenen Bahn mit Motorkraft bewegt wird, wobei die Klemmeinrichtung zwei symmetrische Klemmbacken mit einer der Rohroberfläche angepassten Anlagefläche aufweist, die in zwei starren Backen der Zange radial zur Rohroberfläche geführt und über zwei 15 Winkelhebel mit einer Zugstange verbunden sind.

Eine Schweisszange ist aus der US-A 3 688 071 bekannt. Dabei sind mit der Zugstange hintereinander ein erstes Zugteil, ein gebogenes Teil und ein langgestreckter Griff verbunden. Die Verbindung der drei Teile erfolgt durch zwei Bolzen. Zur Arretierung der Zugstange ist am Griff ein Haken angeformt, der bei einer bestimmten Position der Zugstange einen am Gehäuse der Zange fest angeordneten Zapfen umfasst. Bis zu diesem Punkt wird der Griff mit den Verbindungsteilen und der Zugstange linear bewegt. Erst wenn der Haken am Griff den festen Zapfen umfasst hat, wird der Griff und mit ihm das gebogene Verbindungsteil um den Mittelpunkt des Zapfens herumgedreht. Danach liegt der Griff mit einer abgeschrägten Fläche derart in einer Ausnehmung am Gehäuse der Schweisszange an, dass er und mit ihm auch die Zugstange arretiert sind. Zum Verstellen der Klemmbacken der Schweisszange wird der Griff linear bewegt. Nur zum Arretieren wird er gekippt. Die Federkraft wird dabei im wesentlichen über den angeformten Haken auf den am Gehäuse befestigten Zapfen übertragen.

Bei einer derartigen Anordnung wird zum Schliessen der Klemmeinrichtung zunächst eine lineare Zugbewegung gegen eine Federkraft durchgeführt. Der dazu notwendige Kraftaufwand ist so gross, dass ein feinfühliges Verstellen der Klemmbacken unmöglich ist.

Die Klemmeinrichtung der bekannten Schweisszange ist nur in einer durch die Anordnung des Zapfens am Gehäuse vorgegebenen Position arretierbar. Erst wenn der Haken am Griff den Zapfen umfasst hat, ist eine Arretierung möglich. Durch die Verwendung des an einer festen Position angeordneten Zapfens ist die bekannte Schweissvorrichtung nur für Rohre mit einem zuvor festgelegten bestimmten Durchmesser geeignet.

Aus der US-A 4 161 640 ist eine Schweisszange bekannt, die radial zur Rohroberfläche geführte Klemmbacken aufweist. Diese sind über zwei Winkelhebel mit einer Zugstange verbunden. Dabei ist stets nur eine Zugbewegung in linearer Richtung vorgesehen. Ein feinfühliges Verstellen der Klemmbacken ist daher nur schwer möglich. Die Klemmbacken sind in drei verschiedenen Positionen arretierbar. Dazu werden in die Schweisszange an der Zugstange Blöcke eingesetzt. Eine sichere Arretierung der bekannten Schweisszange an Rohren, deren Oberfläche oder Durchmesser nur geringfügig von der vorgesehenen Grösse und der vorgesehenen Form abweichen, ist nicht möglich.

Der Erfindung liegt die Aufgabe zugrunde, eine Schweisszange zu entwickeln, die eine gleich gute Haltekraft bei unterschiedlichen Rohroberflächen und Rohrdurchmessern gewährleistet. Es soll eine sichere Arretierung gewährleistet sein. Ausserdem soll die Klemmeinrichtung feinfühlig an das Rohr heranzuführen sein.

Die gestellte Aufgabe wird erfindungsgemäss dadurch gelöst, dass die Zugstange von einem Hebel umfasst ist, dass der Hebel durch einen ersten Bolzen mit einem Grundkörper der Schweisszange und durch einen zweiten Bolzen mit einer Lasche verbunden ist, dass ein weiterer Hebel, der einen angeformten Handgriff aufweist, durch einen dritten Bolzen mit der Lasche und durch einen vierten Bolzen mit dem Grundkörper der Schweisszange verbunden ist und dass der zweite Bolzen und der dritte Bolzen mit dem Grundkörper der Schweisszange unmittelbar nicht verbunden sind, dass die beiden Hebel und die Lasche in der Nähe einer gestreckten Lage zusammenarbeiten, bei der der zweite, dritte und vierte Bolzen in einer geraden Linie angeordnet sind, dass zwischen der Zugstange und dem System aus den beiden Hebeln und der Lasche ein Federglied eingebaut ist und dass zur Arretierung der Rohrenden in der Schweisszange das aus der Lasche und aus dem mit einem Handgriff versehenen Hebel gebildete Kniegelenk über die gestreckte Lage hinausführbar ist.

Durch die erfingungsgemässe Kombination von Hebeln und einer Lasche, insbesondere durch den langen Handgriff ist eine feinfühlige Bewegung der Klemmeinrichtung gewährleistet. Eine Drehbewegung des Handgriffes wird in eine lineare Bewegung der Zugstange umgesetzt. Dabei entspricht an der erfingungsgemässen Schweisszange ein relativ grosser Drehwinkel des Handgriffes einer verhältnismässig kleinen linearen Bewegung der Zugstange. Das ermöglicht ein langsames Heranführen der Klemmeinrichtung an das Rohr. Beschädigungen der Rohroberfläche sind dadurch ausgeschlossen.

Mit der erfindungsgemässen Kombination aus Hebeln und einer Lasche ist immer, wenn die Klemmeinrichtung die Rohroberfläche berührt, eine Arretierung durchführbar. Der Widerstand des Rohres führt dazu, dass das aus der Lasche und dem mit einem Handgriff versehenen Hebel gebildete Kniegelenk über die gestreckte Lage hinausgeführt wird. In dieser Lage sind die Zugstange und die mit ihr in Verbindung stehende Klemmeinrichtung in der von ihnen gerade eingenommenen Position gegen die Kraft des Federgliedes arretiert.

Mit der neuen erfindungsgemässen Einrichtung als Teil einer Schweisszange ergibt sich vorteilhaft eine selbst zentrierende Anpassung der Schweisszange an unterschiedliche Rohrdurchmesser und Rohroberflächen, die unabhängig von der Haltekraft ist. Darüber hinaus ist durch das in der Nähe der gestreckten Lage arbeitende Hebel-Lasche-System eine sichere und zugleich einfach zu handhabende Arretierung der zu verschweissenden Rohrenden zwischen den Klemmbacken gewährleistet.

Es werden alle Rohre, unabhängig von ihrem Durchmesser und ihrer Oberflächenbeschaffenheit bedingt durch den erfindungsgemässen Einsatz des in der Nähe der gestreckten Lage arbeitenden Paares aus Hebel und Lasche mit der gleichen Haltekraft gehalten.

Die wirksame Länge der Zugstange kann zur Anpassung an unterschiedliche Rohre mit Hilfe einer auf einem Gewindestück sitzenden Mutter einstellbar sein. Vorzugsweise wirkt die Mutter mit einem an der Zugstange angelenkten Hebel zusammen, an dessen freiem Ende das Hebelpaar angreift. Dabei kann zwischen der Mutter und dem Hebel das Federglied angeordnet sein, das die Haltekraft der Klemmbacken aufbringt.

Zur leichteren Hantierbarkeit ist es vorteilhaft, wenn die Zugstange in Öffnungsrichtung der Klemmbacken unter der Wirkung einer Feder steht. Mit dieser Feder kann nach dem Überschreiten der Totpunktlage die vollständige Öffnung der Klemmbacken erreicht werden. Die Zange kann dann ohne weitere, zusätzliche Betätigung vom Rohr abgenommen werden.

Zur Lösung der Erfindungsaufgabe kann noch dadurch erheblich beigetragen werden, dass die Elektrode auf einem Schlitten sitzt, der in bezug auf die Klemmbacken verstellbar ist. Eine genaue Anpassung erhält man dabei, wenn der Schlitten eine geradlinige Verstellung erstens rechtwinklig zu der durch die Klemmbacken definierten Rohrachse und zweitens parallel zu dieser ermöglicht.

Der Schlitten ist zweckmässig mit Einstellschrauben versehen, die eine fein dosierbare Verstellung gestatten. Dabei kann man ein unbeabsichtigtes Verstellen dadurch vermeiden, dass die Einstellschrauben durch eine Bremsmutter bis zu einem vorgegebenen Losbrechmoment gesichert sind.

Da der Motor für die Bewegung der Elektrode im Hinblick auf die Genauigkeit der Führung und die dafür notwendigen mechanischen Teile eine gewisse Grösse nicht unterschreiten kann, wird die Schweisszange nach der Erfindung vorteilhaft so ausgebildet, dass der Motor für die Bewegung der Elektrode längs der von der Zange vorgegebenen Bahn parallel zur Zugstange angeordnet ist. Dabei können Zugstange und Motor in einem Handgriff der Zange integriert sein, so dass sich eine kompakte Bauweise ergibt.

Der Motor arbeitet zweckmässig auf ein Kegelradgetriebe, dessen Räder zur manuellen Verstellung entgegen der Wirkung einer Feder ausrückbar sind. Im Handgriff kann ein Betätigungshebel zum Ausrücken angeordnet sein. Dies ermöglicht eine Verstellung der Elektrode von Hand ohne Bewegung des Motors.

Die Schweisszange nach der Erfindung ist auch für den Fall brauchbar, dass die Schweissung mit Schweisszusatz vorgenommen wird. Zu diesem Zweck ist vorteilhafterweise vorgesehen, dass der Elektrode ein motorbetätigtes Drahtförderwerk mit einer auf die Elektrodenspitze gerichteten Kaltdrahtdüse für drahtförmigen Schweisszusatz zugeordnet ist. Das Drahtförderwerk kann mit einem Zweirollenantrieb zur Erzielung eines Richteffekts ausgestattet sein. Damit ist es möglich, drahtförmigen Schweisszusatz unmittelbar von der Schweisszange aus zu verarbeiten. Man erspart sich also die sonst verwendeten Verbindungen zu einem Drahtförderwerk, die das Hantieren mit solchen Schweisszangen erschweren. Bei der Erfindung kann man kurze Drahtstücke verarbeiten, die unmittelbar von dem Drahtförderwerk gehalten werden.

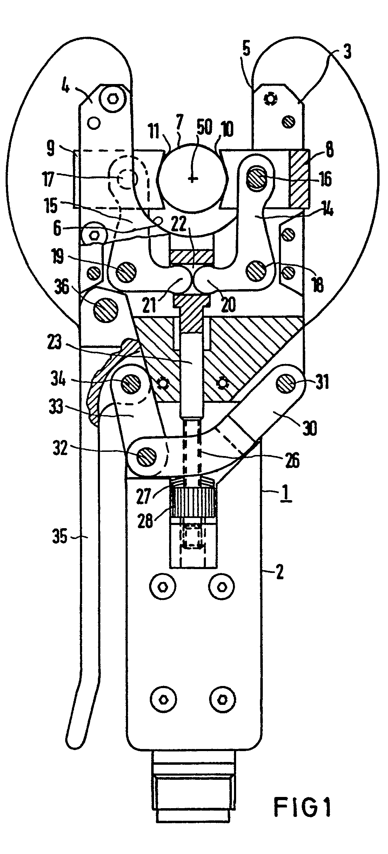

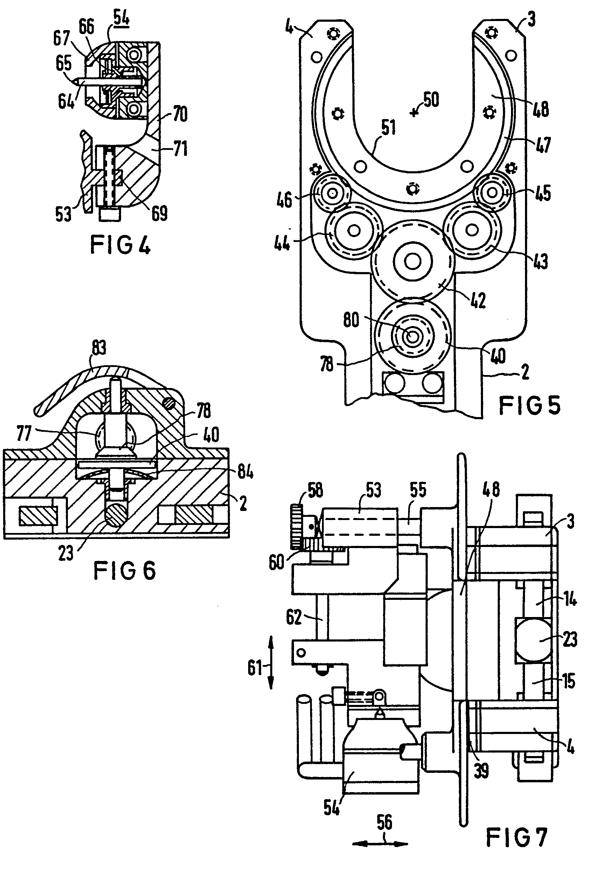

Zur näheren Erläuterung der Erfindung wird anhand der beiliegenden Zeichnung ein Ausführungsbeispiel beschrieben, das in den Fig. 1 bis 3 in drei Gesamtansichten mit Teilschnitten und in den Fig. 4 bis 7 in Teilansichten dargestellt ist.

Die Schweisszange 1 zum Verbinden von zwei aneinanderstossenden Rohren besitzt einen etwa 10 cm langen Griff 2, von dem zwei symmetrische starre Backen 3 und 4 ausgehen, die eine Öffnung 5 zur Aufnahme der zu schweissenden Rohrenden begrenzen. Im Bereich des Griffes 2 ist die Öffnung 5 mit einem Kreisbogen 6 gerundet. In dessen Mittelpunkt 50 sitzt das in der Fig. 1 dargestellte Rohrende 7, das einen Durchmesser von etwa 20 mm hat.

In den starren Backen 3 und 4 sind zwei gegenüberliegende bewegliche Klemmbacken 8 und 9 radial zur Rundung 6 auf einer Geraden verstellbar geführt, die durch den Mittelpunkt 50 verläuft. Die Klemmbacken 8 und 9 besitzen dem Rohr 7 zugekehrte keilförmige ausgebildete Anlageflächen 10 und 11. Sie werden über zwei Winkelhebel 14 und 15 betätigt, die mit den Klemmbacken 8, 9 über Bolzen 16, 17 verbunden sind.

Die Winkelhebel 14, 15 sind mit Bolzen 18, 19 an den Backen 3 und 4 gelagert. Ihre den Klemmbacken 8, 9 abgekehrten kugelförmig gerundeten Enden 20 und 21 greifen in den Schlitz 22 einer Zugstange 23, die im Griff 2 an seinem Übergang zu den Backen 3, 4 längsbeweglich gelagert ist.

Das den Winkelhebel 14, 15 abgekehrte Ende der Zugstange 23 ist mit einem Gewinde 26 versehen. Dort sitzen Tellerfedern 27, die sich gegen eine Rändelmutter 28 abstützen. Auf der Rändelmutter abgekehrten Seite der Tellerfedern 27 greift ein gabelförmiger Hebel 30 um den Gewindeteil 26 der Zugstange 23, der mit einem Bolzen 31 an dem von den Backen 3, 4 und dem Griff 2 gebildeten Grundkörper angelenkt ist. Das andere Ende des Hebels 30 ist über einen Bolzen 32 mit einer Lasche 33 verbunden, die bei 34 an einem Handgriff 35 angelenkt ist. Der Handgriff 35 ist mit einem Bolzen 36 ebenfalls am Grundkörper befestigt. Er bildet mit der Lasche 33 ein Kniegelenk zur Betätigung der Zugstange 23 über den Hebel 30. Das Kniegelenk kann zur Selbstsperrung über die Strecklage hinaus gegen den Griff 2 geführt werden.

In dem Griff 2 und den starren Backen 3 und 4 ist eine Zahnradkombination angeordnet, die mit einer Platine 39 abgedeckt ist. Die aus der Fig. 5 ersichtliche Zahnradkombination umfasst ein Antriebsrad 40, das mit einem Verteilerrad 42 kämmt. Von diesem werden über zwei gleiche Zwischenräder 43 und 44 zwei Antriebsräder 45 und 46 betätigt, die mit dem Zahnkranz 47 einer Scheibe 48 kämmen. Die Scheibe 48 liegt drehbar in einem Schlitz zwischen der Platine 39 und den Backen 3, 4. Sie hat eine mit der Öffnung 5 übereinstimmende Ausnehmung 51, so dass in der in der Fig. 5 dargestellten Lage die Öffnung 5 zwischen den Backen 3, 4 in voller Grösse freigelegt ist. Beim Betätigen des Antriebsrades 40 verschiebt sich die Scheibe 48 jedoch um den Mittelpunkt 50 der Rundung 6, auf den das zu schweissende Rohr 7 mit Hilfe der Klemmbacken 8, 9 zentriert wird.

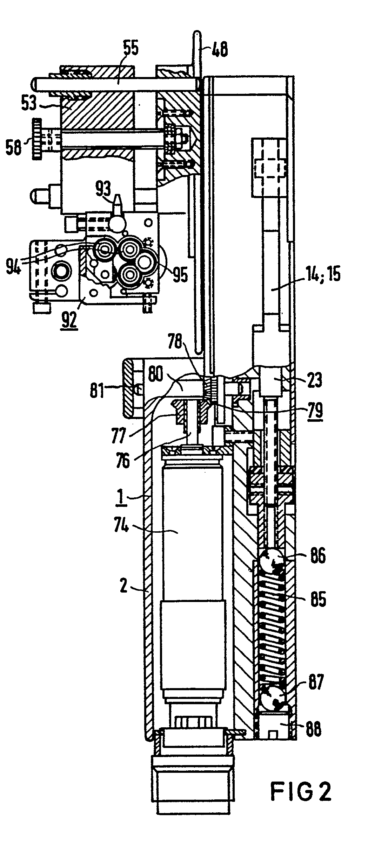

Die Scheibe 48 trägt, wie die Fig. 2 und 7 zeigen, auf der den Backen 3, 4 abgekehrten Seite einen Schlitten 53 für einen Schweisskopf 54. Damit ist der Schweisskopf zum einen auf einem Bolzenpaar 55 quer zu den Backen 3, 4 verstellbar, wie durch den Pfeil 56 angedeutet ist. Die Verstellung kann mit einer Rändelschraube 58 fein dosiert werden. Eine weitere Rändelschraube 60 ermöglicht eine Verstellung des Schweisskopfes 54 rechtwinklig zu den Bolzen 55 in Richtung der Pfeile 61. Dabei ist der Schweisskopf auf Bolzen 62 geführt. Längs dieser kann er parallel zur Verstellbewegung der Klemmbacken 8, 9 gegenüber den zu verschweissenden Rohrenden 7 justiert werden.

Die Fig. 4 zeigt einen Schnitt durch den Schweisskopf 54. Man erkennt die Wolframelektrode 64 mit ihrer Elektrodenspitze 65 und die Kanäle 66 für das die Elektrodenspitze einhüllende Schutzgas, das mit Hilfe eines Düsenkörpers 67 gegen die Elektrodenspitze 65 gelenkt wird. Der Schweisskopf 54 sitzt an einem mit dem Schlitten 53 über ein Gelenk 69 verbundenen Halter 70. Der Halter 70 ist mit einer Beobachtungsbohrung 71 für den Lichtbogen versehen.

Die Fig. 2 zeigt in einem Schnitt durch die Schweisszange 1 in Längsrichtung des Griffes 2 einen Elektromotor 74, der im Griff 2 untergebracht ist. Auf der Welle 76 des Elektromotors sitzt ein Stirnrad 77, das mit einem Gegenrad 78 ein Kegelgetriebe 79 bildet. Das Gegenrad 78 sitzt auf einer gemeinsamen Welle 80 mit dem Antriebsrad 40 (Fig. 5). Zwischen Stirnrad 77 und Gegenrad 78 ist eine Kupplung vorgesehen, die ein Lösen des Antriebsmotors 74 ermöglicht. Die Welle 80 des Gegenrades 78 führt nämlich mit einem Stift 81 aus dem Griff 2 heraus. Dieser Stift kann, wie in Fig. 6 dargestellt ist, mit einem Hebel 83 gegen die Wirkung einer Blattfeder 84 auf der hinter dem Antriebsrad 40 liegenden Seite des Gegenrades 78 so verstellt werden, dass das Gegenrad 78 ausser Eingriff mit dem Stirnrad 77 kommt. Dann ist es möglich, die Scheibe 48 ausser Eingriff mit dem Motor 74 von Hand zu verstellen.

Die Fig. 2 lässt ferner erkennen, dass auf das den Winkelhebeln 14, 15 abgekehrte Ende der Zugstange 23 eine Spiralfeder 85 drückt, an deren Enden zwei Kugeln 86 und 87 vorgesehen sind. Die Kugel 87 stützt sich auf eine Mutter 88 ab, die in den Griff 2 eingeschraubt ist. Mit der Feder 85 wird eine Vorspannung in Öffnungsrichtung der Klemmbacken 8, 9 auf die Winkelhebel 14, 15 ausgeübt.

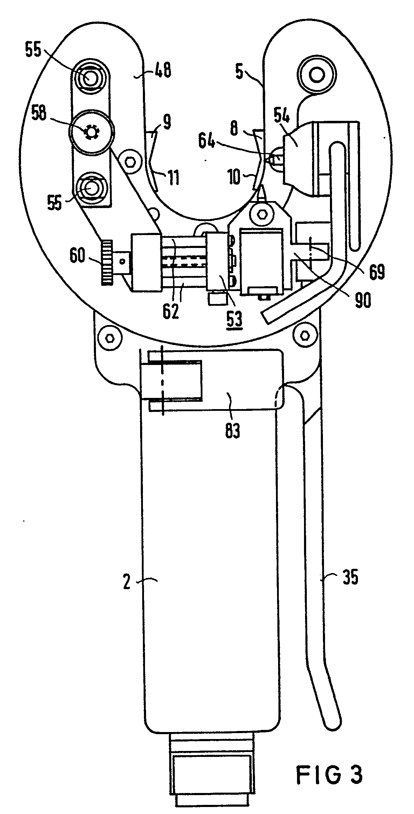

In Fig. 3 ist die Verstellung des Schweisskopfes 54 aus einer anderen Blickrichtung zu sehen. Man erkennt die Haltebolzen 55, die an der Scheibe 48 angreifen, und die Rändelmutter 58 zur Verstellung des Schweisskopfes 54 quer zur Ebene der Scheibe 48. Die Fig. 3 zeigt ferner, dass der Schweisskopf 54 über die Gelenkverbindung 69 mit dem Teil 90 des Schlittens 53 verbunden ist, an dem die mit der Rändelmutter 60 zu bedienende Verstellmöglichkeit in Längsrichtung der Elektrode 64 angreift. Die Fig. 3 lässt ferner deutlich erkennen, dass die Klemmbacken 8, 9 mit ihren Anlageflächen 10, 11 in den Schlitz 5 vorspringen.

In Fig. 2 ist das dem Schweisskopf 54 zugeordnete Drahtförderwerk 92 zu sehen. Es umfasst eine Kaltdrahtdüse 93, durch die Drahtstücke von gewünschter Länge, zum Beispiel 5 bis 50 cm mit Hilfe eines Rollenpaares 94 geschoben werden, das von einem Elektromotor 95 unmittelbar betätigt wird. Es gibt also keine hinderliche Verbindung mehr zu anderen ortsfesten Schweissdrahtvorräten.

## Patentansprüche

1. Schweisszange (1) zum Verbinden von zwei aneinander stossenden Rohrenden (7) durch Lichtbogenschweissung mit einer Klemmeinrichtung zur Festlegung an mindestens einem Rohrende (7) und mit einer Elektrode (64), die auf einer durch die Zange (1) vorgegebenen Bahn mit Motorkraft bewegt wird, wobei die Klemmeinrichtung zwei symmetrische Klemmbacken (8, 9) mit einer der Rohroberfläche angepassten Anlagefläche (10, 11) aufweist, die in zwei starren Backen (3, 4) der Zange (1) radial zur Rohroberfläche geführt und über zwei Winkelhebel (14, 15) mit einer Zugstange (23) verbunden sind, dadurch gekennzeichnet, dass die Zugstange (23) von einem Hebel (30) umfasst ist, dass der Hebel (30) durch einen ersten Bolzen (31) mit einem Grundkörper der Schweisszange (1) und durch einen zweiten Bolzen (32) mit einer Lasche (33) verbunden ist, dass ein weiterer Hebel (35), der einen angeformten Handgriff aufweist, durch einen dritten Bolzen (34) mit der Lasche (33) und durch einen vierten Bolzen (36) mit dem Grundkörper der Schweisszange (1) verbunden ist und dass der zweite Bolzen (32) und der dritte Bolzen (34) mit dem Grundkörper der Schweisszange (1) unmittelbar nicht verbunden sind, dass die beiden Hebel und die Lasche (30, 33 und 35) in der Nähe einer gestreckten Lage zusammenarbeiten, bei der der zweite, dritte und vierte Bolzen (32, 34 und 36) in einer geraden Linie angeordnet sind, dass zwischen der Zugstange (23) und dem System aus den beiden Hebeln und der Lasche (30, 33 und 35) ein Federglied (27) eingebaut ist und dass zur Arretierung der Rohrenden in der Schweisszange (1) das aus der Lasche (33) und aus dem mit einem Handgriff versehenen Hebel (35) gebildete Kniegelenk über die gestreckte Lage hinausführbar ist.

2. Schweisszange nach Anspruch 1, wobei die wirksame Länge der Zugstange (23) mit Hilfe einer auf einem Gewindestück (26) sitzenden Mutter (28) einstellbar ist, dadurch gekennzeichnet, dass die Mutter (28) mit einem an der Zange (1) angelenkten Hebel (30) zusammenwirkt, an dessen freiem Ende (32) das Hebelpaar (33, 35) angreift und dass zwischen der Mutter (28) und dem Hebel (30) eine die Zugstange (23) umgebende Feder (27) angeordnet ist.

3. Schweisszange nach Anspruch 1 oder 2, dadurch gekennzeichnet, dass die Zugstange (23) in Öffnungsrichtung der Klemmbacken (8, 9) unter der Wirkung einer Feder (85) steht.

4. Schweisszange nach einem der Ansprüche 1 bis 3, dadurch gekennzeichnet, dass die Elektrode (64) auf einem Schlitten (53) sitzt, der in bezug auf die Klemmbacken (8, 9) verstellbar ist, wobei der Schlitten (53) eine geradlinige Verstellung

1. rechtwinklig zu der durch die Klemmbacken (8, 9) definierten Rohrachse (50) und

2. parallel zu dieser ermöglicht.

5. Schweisszange nach Anspruch 4, dadurch gekennzeichnet, dass der Schlitten (53) mit Einstellschrauben (58, 60) versehen ist, die durch eine Bremsmutter bis zu einem vorgegebenen Losbrechmoment gesichert sind.

6. Schweisszange nach einem der Ansprüche 1 bis 5, dadurch gekennzeichnet, dass der Motor (74) für die Bewegung der Elektrode (64) längs der von der Zange (1) vorgegebenen Bahn parallel zur Zugstange (23) angeordnet ist und dass Zugstange (23) und Motor (74) in einem Handgriff (2) der Zange (1) integriert sind.

7. Schweisszange nach Anspruch 6, dadurch gekennzeichnet, dass der Motor (74) auf ein Kegelradgetriebe (79) arbeitet, dessen Räder (77, 78) zur manuellen Verstellung entgegen der Wirkung einer Feder (84) ausrückbar sind.

8. Schweisszange nach Anspruch 6 und 7, dadurch gekennzeichnet, dass am Handgriff (2) ein Betätigungshebel (83) zum Ausrücken angeordnet ist.

9. Schweisszange nach einem der Ansprüche 1 bis 8, dadurch gekennzeichnet, dass das Drahtförderwerk (92) mit einem Zweirollenantrieb (94) zur Erzielung eines Richteffekts ausgestattet ist.

**Claims**

1. Welding tongs (1) to join two abutting pipe ends (7) by arc welding, with a clamping device to be fixed on to at least one pipe end (7), and with an electrode (64) which is moved by motor power on a defined course through the tongs (1), the clamping device having two symmetrical clamping jaws (8, 9) with a contact surface (10, 11) matching the pipe's surface, the clamping jaws (8, 9) in two fixed jaws (3, 4) of the tongs (1) being extended radially to the pipe's surface and being connected by way of two angle levers (14, 15) with a pull rod (23), characterized in that:

the pull rod (23) is encompassed by a lever (30); that the lever (30) is connected by a first bolt (31) with a frame of the welding tongs (1) and by a second bolt (32) with a link (33); that a further lever (35) which has an integrally moulded handle, is connected by a third bolt (34) with the link (33) and by a fourth bolt (36) with the frame of the welding tongs (1) and that the second bolt (32) and the third bolt (34) are not directly connected with the frame of the welding tongs (1); the two levers and the link (30, 33 and 35) operate together in the vicinity of a flat area where the second, third and fourth bolts (32, 34 and 36) are arranged in a straight line; between the pull rod (23) and the system of the two levers and the link (30, 33 and 35) a spring section (27) is disposed, and that; in order to lock the pipe ends in the welding tongs (1) the hinged joint, formed of the link (33) and of the lever (35) provided with a handle, can be moved across the flat area.

2. Welding tongs according to claim 1, the operative length of the pull rod (23) being adjustable with the help of a nut (28) disposed on a threaded piece (26), characterized in that the nut (28) operates together with a lever (30) hinged to the tongs (1), the pair of levers (33, 35) gripping on to the free end (32) of the lever (30), and that between the nut (28) and the lever (30) a spring (27) surrounding the pull rod (23) is arranged.

3. Welding tongs according to claim 1 or 2, characterized in that the pull rod (23), under the operation of a spring (85), extends in the direction in which the clamping jaws (8, 9) open.

4. Welding tongs according to one of claims 1 to 3, characterized in that the electrode (64) is disposed on a slide (53) which is adjustable with regard to the clamping jaws (8, 9), the slide (53) enabling a linear adjustment 1. at right angles to the pipe axis (50) defined through the clamping jaws (8, 9) and 2. parallel to it.

5. Welding tongs according to claim 4, characterized in that the slide (53) is provided with adjusting screws (58, 60) which are secured by way of a brake nut up until a specified breakaway torque.

6. Welding tongs according to one of claims 1 to 5, characterized in that the motor (74) for the movement of the electrode (64) along the course defined by the tongs (1) is arranged parallel to the pull rod (23) and that pull rod (23) and motor (74) are integrated into one handle (2) of the tongs (1).

7. Welding tongs according to claim 6, characterized in that the motor (74) operates on a bevel gearing (79) the gears (77, 78) of which can be disengaged against the operation of a spring (84) for manual adjustment.

8. Welding tongs according to claim 6 and 7, characterized in that an operating lever (83) is arranged on the handle (2) for the disengaging.

9. Welding tongs according to one of claims 1 to 8, characterized in that the wire lifting arrangement (92) is equipped with a two-reel drive (94) in order to achieve a directional effect.

## Revendications

1. Pince de soudage (1) servant à réunir deux extrémités de tubes (7) en aboutement, par soudage à l'arc, comportant un dispositif de serrage destiné à être fixé sur au moins une extrémité de tube (7), et une électrode (64) déplacée sous l'action d'un moteur sur une trajectoire prédéterminée par la pince (1), le dispositif de serrage comportant deux mâchoires de serrage symétriques (8, 9) possédant des surfaces respectives d'application (10, 11), qui sont adaptées à la surface de tubes, sont guidées radialement par rapport à la surface des tubes dans deux mâchoires fixes (3, 4) de la pince (1) et sont reliées à une barre de traction (23) par l'intermédiaire de deux leviers coudés (14, 15), caractérisée par le fait que la barre de traction (23) est entourée par un levier (30), que le levier (30) est relié par l'intermédiaire d'un premier axe (31) à un corps de base de la pince de soudage (1) et par un second axe (32) à une patte (33), qu'un autre levier (35), qui comporte une poignée formée par façonnage, est relié à la patte (33) par l'intermédiaire d'un troisième axe (34) et au corps de base de la pince de soudage (1) par l'intermédiaire d'un quatrième axe (36), et que le second axe (32) et le troisième axe (34) ne sont pas reliés directement au corps de base de la pince de soudage (1), que les deux leviers et la patte (30, 33 et 35) coopèrent au voisinage d'une position d'extension, à laquelle les second, troisième et quatrième axes (32, 34 et 36) sont disposés sur une ligne droite, qu'un élément de ressort (27) est monté entre la barre de traction (23) et le système formé par les deux leviers et par la patte (30, 33 et 35), et que pour le blocage des extrémités des tubes dans la pince de soudage (1), l'articulation pivotante formée par la patte (33) et par le levier (35) muni d'un manche, peut être ressortie au-delà de la position d'extension.

2. Pince de soudage suivant la revendication 1, dans laquelle la longueur active de la barre de traction (23) est réglable à l'aide d'un écrou (28) monté sur un organe fileté (26), caractérisée par le fait que l'écrou (28) coopère avec un levier (30), qui est articulé sur la pince (1) et dont l'extrémité libre (32) est attaquée par le couple de leviers (33, 35), et qu'un ressort (27) entourant la barre de traction (23) est disposé entre l'écrou (28) et le levier (30).

3. Pince de soudage suivant la revendication 1 ou 2, caractérisée par le fait que la barre de traction (23) est soumise à l'action d'un ressort (85), dans le sens de l'ouverture des mâchoires de serrage (8, 9).

4. Pince de soudage suivant l'une des revendications 1 à 3, caractérisée par le fait que l'électrode (64) est disposée sur un chariot (53) qui est déplaçable par rapport aux mâchoires de serrage (8, 9), le chariot (53) permettant un déplacement rectiligne

1. perpendiculairement à l'axe (50) des tubes définis par les mâchoires de serrage (8, 9), et

2. parallèlement à cet axe.

5. Pince de soudage suivant la revendication 4, caractérisée par le fait que le chariot (53) comporte des vis de réglage (58, 60), qui sont serrées au moyen d'un écrou de freinage jusqu'à un couple initial prédéterminé de relâchement.

6. Pince de soudage suivant l'une des revendications 1 à 5, caractérisée par le fait que le moteur (74) servant à déplacer l'électrode (64) le long de la trajectoire prédéterminée par la pince (1) est disposé parallèlement à la barre de traction (23) et que la barre de traction (23) et le moteur (74) sont intégrés dans une poignée (2) de la pince (1).

7. Pince de soudage suivant la revendication 6, caractérisé par le fait que le moteur (74) actionne le mécanisme à pignons coniques (79), dont les pignons (77, 78) peuvent être désaccouplés, à l'encontre de l'action d'un ressort (84), au moyen d'un déplacement manuel.

8. Pince de soudage suivant la revendication 6 et 7, caractérisée par le fait qu'un levier d'actionnement (83) servant à réaliser le désaccouplement est disposé sur la poignée (2).

9. Pince de soudage suivant l'une des revendications 1 à 8, caractérisée par le fait que l'unité (92) d'alimentation du fil comporte un dispositif d'entraînement à deux galets (94) permettant d'obtenir un effet directif.

FIG 1

FIG 2

FIG 3

FIG 4

FIG 5

FIG 6

FIG 7